# EUROPEAN PATENT SPECIFICATION

(11) **EP 4 290 411 B1**
(45) Date of publication and mention of the grant of the patent: **18.03.2026**
(21) Application number: 22178160.2
(22) Date of filing: 09.06.2022
(51) Int. Cl.: G06N 3/063, G06N 3/045, G06N 3/096

(54) **SYSTEM COMPRISING SEMICONDUCTOR CHIP AND METHOD FOR MANUFACTURING THE SEMICONDUCTOR CHIP OR THE SYSTEM**
SYSTEM MIT HALBLEITERCHIP SOWIE VERFAHREN ZUR HERSTELLUNG DES HALBLEITERCHIPS ODER DES SYSTEMS
SYSTÈME COMPRENANT UNE PUCE À SEMI-CONDUCTEUR ET PROCÉDÉ DE FABRICATION DE LA PUCE À SEMI-CONDUCTEUR OU DU SYSTÈME

(43) Date of publication of application: 13.12.2023
(73) Proprietor: Fraunhofer-Gesellschaft zur Förderung der angewandten Forschung e.V., 80686 München (DE); Universität des Saarlandes, 66123 Saarbrücken (DE)
(72) Inventor: ZIMMERMANN, Heiko, 66280 Sulzbach (DE); FUHR, Günter R., 10178 Berlin (DE)
(74) Representative: Schiweck Weinzierl Koch Patentanwälte Partnerschaft mbB

(56) References cited:
- ANONYMOUS: "Neuromorphic Analog Signal Processing (NASP)", 1 January 2022 (2022-01-01), pages 1 - 14, XP55983251, Retrieved from the Internet <URL:https://polyn.ai/technology-3/> [retrieved on 20221121]
- ANONYMOUS: "Neuromorphic Analog Implementation for Tiny AI Applications", 1 January 2022 (2022-01-01), pages 1 - 9, XP055983295, Retrieved from the Internet <URL:https://polyn.ai/wp-content/uploads/2022/05/neuromorphic-analog-signal-processing-white-paper.pdf> [retrieved on 20221121]
- JAIN PARAKH: "Transfer learning and fine tuning of neural networks", 1 August 2021 (2021-08-01), pages 1 - 10, XP093000123, Retrieved from the Internet <URL:https://www.indusmic.com/post/transfer-learning-and-fine-tuning-of-neural-networks> [retrieved on 20221121]
- MA SHUNLI ET AL: "An artificial neural network chip based on two-dimensional semiconductor", SCIENCE BULLETIN, vol. 67, no. 3, 15 February 2022 (2022-02-15), CN, pages 270 - 277, XP093235733, ISSN: 2095-9273, DOI: 10.1016/j.scib.2021.10.005

## Description

The present invention relates to a semiconductor chip, a device and a system comprising the semiconductor chip, and method for manufacturing the system.

Artificial intelligence may be used to recognize patterns in technical applications, for example in image recognition or in machine parameter monitoring etc. Artificial neural networks that imitate the function of biological neurons may provide artificial intelligence. Those neural networks may be trained with training data wherein the training adapts the neural networks such that they improve their ability to perform their tasks.

From "Neuromorphic Analog Signal Processing (NASP)", retrieved on 21 November 2022, URL: https://polyn.ai/technology-3, it is known to create a semiconductor chip with an artificial neural network being based on a software-based trained artificial neural network.

"Neuromorphic Analog Implementation for Tiny AI Applications", retrieved on 1 January 2022, URL: https://polyn.ai/wp-content/uploads/2022/05/Neuromorphic-analog-signal-processing-white-paper.pdf, discusses in-memory computing techniques.

Furthermore, from Parakh, Jain, "Transfer learning and fine tuning of neural networks", 01.08.2021 pages 1 to 10, it is known how to train and fine tune an artificial neural network.

Ma Shunli et al: "An artificial neural network chip based on two-dimensional semiconductor",Science Bulletin, vol. 67, no. 3, 15 February 2022 (2022-02-15), pages 270-277, CN ISSN: 2095-9273, DOI: 10.1016/ j.scib.2021.10.005, unveils a functional MoS₂ artificial neural network chip.

Different artificial neural networks may be coupled to distribute sub-tasks of the task to be performed, e. g. if the task is image recognition, a first sub-task may a rough categorization of the image elements and a second sub-task may be the recognition of image elements. In the human brain, for example, a first part of the brain roughly categorizes the image elements in e. g. dangerous or harmless elements, wherein a second part of the brain recognizes the image elements of the same image. The first part of the brain may influence the second part of the brain, for example, to accelerate the recognition of dangerous image elements.

This structure may be formed with a first and a second artificial neural network, wherein the first artificial neural network is recursively coupled to the second artificial neural network. Both artificial neural networks receive the same input that is based on the same data. The first artificial neural network may influence the outcome of the second artificial neural network, wherein the second artificial neural network does not influence the first one. Such an architecture is known from WO 2020/233850 A1.

Since the first artificial neural network influences the second artificial neural network, the first artificial neural network must provide output before the second artificial neural network. The first artificial neural network may provide output before the second artificial neural network if the first artificial neural network is less complex than the second one or if the input data for the first artificial neural network is subsampled or if the second artificial neural network is started after the first artificial neural network generates output for influencing the second artificial neural network.

There is a need to provide a fast processing artificial neural network that may comprise the same complexity and that may use the same sampling of the input data as another artificial neural network, and that may complete operation during operation of the other artificial neural network.

The object of the present invention is solved by the subject-matter of the independent claims. Further embodiments are incorporated in the dependent claims and the following description.

According to the present invention, a semiconductor chip obtainable by a method for manufacturing a semiconductor chip is provided, the method comprising at least the following steps: providing a first trained digital artificial neural network; determining a state of the first trained digital artificial neural network, the state comprising at least information about digital nodes of the first trained digital artificial neural network and information about a digital connection architecture between the digital nodes of the first trained digital artificial neural network; manufacturing a semiconductor chip comprising an analogous electrical circuit having an analogous artificial neural network being designed according to the state of the first trained digital artificial neural network.

The term "digital artificial neural network" when used herein encompasses a software-based artificial neural network, wherein the software runs on an information technology (IT) platform or in a microprocessor. The digital artificial neural network therefore only exists on a platform of digital electronic circuits, e. g. in a random-access memory. Thus, the nodes and the connections between the nodes exist only virtually and may be deleted. Due to the architecture of the software-based artificial neural network, the IT platform or the microprocessor process each node of the digital artificial neural network sequentially.

The term "analogous artificial neural network" when used herein encompasses an artificial neural network formed on analogous hardware, e. g. a hardwired microchip. The analogous artificial neural network is physically existent as an analogous electrical circuit. The analogous electrical lines and components of the semiconductor chip themselves form the analogous artificial neural network. Thus, the nodes of the analogous artificial neural network and connections between the nodes cannot be deleted completely. The nodes of each layer of an analogous artificial neural network processes input data simultaneously.

The method provides the semiconductor chip comprising analogous electrical circuits. Those analogous electrical circuits are non-programmable and form an analogous artificial neural network. That analogous artificial neural network operates analogously such that electrical signals at an input layer of the analogous artificial neural network propagate simultaneously through all nodes of a layer of the artificial neural network. Thus, the number of layers determines the processing velocity of the electrical signal. In a digital artificial neural network, the nodes of a layer process the signals one after another. Therefore, the number of nodes determines the processing velocity of the electrical signal in a digital artificial neural network. Since the number of nodes usually is greater than the number of layers, the digital artificial neural network is slower than the analogous artificial neural network having the same complexity. Consequently, if the analogous artificial neural network has the same number of nodes and layers as the digital artificial neural network, the analogous artificial neural network on the semiconductor chip is faster than a corresponding digital artificial neural network that runs on an IT platform or microprocessor. Both artificial neural networks may have the same sampling for the input data and may have the same complexity.

For manufacturing the semiconductor chip, a first digital artificial neural network is trained as commonly known. The first trained digital artificial neural may also be called digital master artificial neural network. Then, the state of the first trained digital artificial neural network is determined. That state may be read out from the program that runs first trained digital artificial neural network. The state comprises information about at least the digital nodes of the first trained digital artificial neural network and the digital connection between the digital nodes, the so-called digital connection architecture. The information about at least the digital nodes may for example comprise the bias, the weights, the transfer function and the activation function. The information about the digital nodes and the digital connection architecture completely determines the first digital artificial neural network. An analogous artificial neural network is designed according to that information. The designed analogous artificial neural network is provided as an analogous electrical circuit on the semiconductor chip. Of course, the semiconductor chip being manufactured by the method may comprise more than one analogous artificial neural network. Each of the more than one analogous artificial neural networks may be based on a different trained digital artificial neural network. Some of the more than one analogous artificial neural networks may be based on the same trained digital artificial neural network.

As mentioned above, the analogous artificial neural network operates much faster than the first trained digital artificial neural network. Thus, the invention provides a fast-processing artificial neural network that may comprise the same complexity and that may use the same sampling of the input data as another artificial neural network, and that may complete operation during operation of the other artificial neural network.

Particularly, in an example, the analogous artificial neural network may be recursively coupled to a second digital artificial neural network having the same complexity and using the same sampling for the input data. The coupling may for example be performed via an analog-digital interface. Then, the analogous artificial neural network may output electrical signals for influencing the operation of the second digital artificial neural network while the second digital artificial neural network operates.

Since the analogous artificial neural network is implemented on a hardwired analogous electronic circuit, any moral ethical basic rules for artificial intelligence may be permanently implemented in the analogous artificial neural network. Those rules can only be changed within known limits or even be unchangeable.

Furthermore, hacking an analogous artificial neural network is impossible, since the analogous artificial neural network runs on the semiconductor chip which does not require any external access connection.

In an example, the analogous artificial neural network may comprise analogous electronic nodes and an analogous connection architecture between the analogous electronic nodes, wherein in the step manufacturing a semiconductor chip, the analogous electronic nodes and the analogous connection architecture are manufactured to correspond to the digital nodes and the digital connection architecture of the first trained digital artificial neural network.

Analogous electrical components may form the analogous electronic nodes and the analogous connection architecture between those analogous electronic nodes. The bias, the weights, the transfer function and the activation function of the analogous electronic nodes correspond to the bias, the weights, the transfer function and the activation function of the digital nodes of the first trained digital artificial neural network. Furthermore, electrical lines between the analogous electronic nodes that form the analogous connection architecture correspond to the digital connections between the digital nodes.

The semiconductor chip comprises an analogous electrical circuit having an analogous artificial neural network being designed according to the state of the first trained digital artificial neural network.

In an example, the analogous artificial neural network of the semiconductor chip may comprise analogous electronic nodes and an analogous connection architecture between the analogous electronic nodes, wherein the analogous electronic nodes and the analogous connection architecture correspond to the digital nodes and the digital connection architecture of the first trained digital artificial neural network, respectively.

Advantages and effects as well as further developments of the semiconductor chip result from the advantages and effects as well as further developments of the method described above. In this respect, it is referred to the preceding description.

According to an example, the analogous electrical circuit may comprise at least one input being configured to receive at least one input signal and at least one output being configured to provide at least one analogous output signal, wherein the analogous artificial neural network electrically connects the input to the output.

The input may for example comprise electrical connectors being configured to receive signals. The signals may be electrical signals, optical signals, acoustic signals, olfactory signals etc. Also, the output may for example comprise electrical connectors being configured to provide electrical signals. The input may be electrically connected to an input layer of the analogous artificial neural network. Alternatively, the input may be the input layer of the analogous artificial neural network. The output may be electrically connected to an output layer of the analogous artificial neural network. Alternatively, the output may be the output layer of the analogous artificial neural network.

In a further example, the analogous artificial neural network may comprise at least one analogous electronic switch and/or at least one analogous electronic node.

The analogous electronic switch may be configured to interrupt or establish an electrical connection between analogous nodes of different layers of the analogous artificial neural network. For example, a switch array may be arranged between the input layer and the first hidden layer of the analogous artificial neural network. That means that the electrical connection between each node of the input layer and each node of the first hidden layer comprises an analogous electronic switch. Then, the switch array may control the propagation of the electrical signal through the analogous artificial neural network. The analogous artificial neural network processes the electrical signal only if the switch array does not interrupt the electrical connection between the input layer and the first hidden layer. Hence, the switch array may control the start of the operation of the analogous artificial neural network. Of course, any electrical connection of the analogous artificial neural network may comprise an analogous electronic switch to control the propagation of the electric signal.

An analogous electronic switch may for example comprise a transistor and/or a field effect transistor. Furthermore, a controller providing a control signal may control the analogous electronic switch. The semiconductor chip may for example comprise the controller. Alternatively, the controller and the semiconductor chip may be separate components.

Furthermore, for example, the input may comprise a sensor array being configured to provide sensor data signals to the analogous artificial neural network from each sensor of the sensor array simultaneously, wherein the semiconductor chip preferably further comprises a control input being configured to receive a start signal, wherein further preferably the sensor array is further configured to provide sensor data signals when receiving the start signal.

All sensors of the sensor array may provide the corresponding sensor signals simultaneously. For example, the sensor array may comprise a pixel array. That pixel array may for example comprise active pixel sensors. Furthermore, the sensors of the sensor array may for example additionally provide the corresponding sensor signals sequentially. Then the sensor array may serve as input for the analogous artificial neural network and a second digital artificial neural network, simultaneously. In another example, the sensor array may comprise an olfactory sensor array, a pressure sensor array, an ultrasound sensor array, a temperature sensor array, and/or an acoustic sensor array.

In an example which does not fall into the scope of the invention, the analogous electrical circuit may comprise only electronic components having fixed characteristics.

In that example, the analogous artificial neural network is fixed and may not be trained. This example, provide a simple to manufacture and cost-efficient semiconductor chip with an analogous artificial neural network.

According to the invention, the analogous electrical circuit comprises at least one electronic component having changeable characteristics.

The analogous artificial neural network may be trained by changing the characteristics of the at least one electronic component. The at least one electronic component having changeable characteristics may for example be an adjustable resistor or an analogous electronic switch. The adjustable resistor may for example electrically connect two nodes to adjust the weight of the electrical connection between those nodes. The analogous electronic switch may for example switch on and off an electrical connection between two nodes. The less electronic component having changeable characteristics are present in the analogous artificial neural network, the less is the training capability of the analogous artificial neural network.

According to an aspect of the invention, a system is provided comprising an input projection layer, at least one second digital artificial neural network, and at least one semiconductor chip according to the above description or a device according to the above description, wherein the semiconductor chip is recursively coupled to the second digital artificial neural network such that the output of the semiconductor chip is provided to at least one hidden layer of the second digital artificial neural network and wherein the input of the semiconductor chip and an input layer of the second digital artificial network are electrically connected to the input projection layer.

The analogous artificial neural network and the second digital artificial neural network operate with the same input data of the input projection layer. The input projection layer may provide the input data to the input layer of the analogous artificial neural network simultaneously, wherein the digital nodes of input layer of the second digital artificial neural network may receive the input data sequentially. Hence both, the analogous artificial neural network and the second digital artificial neural network receive input data with the same sampling. Furthermore, the analogous artificial neural network operates faster than the second digital artificial neural network. Thus, the analogous artificial neural network provides output to influence the operation of the second digital artificial neural network before the second digital artificial neural network provides output.

In an example, the system may further comprise at least one interface for controlling and transferring data being configured to recursively couple the semiconductor chip to the second digital artificial neural network, wherein the interface is preferably configured to provide at least one analogous control signal for the analogous artificial neural network, wherein the interface is further preferably configured to receive the analogous output signal from the semiconductor chip, to generate a digital control signal from the analogous output signal and to provide at least one digital control signal to at least one digital node in at least one hidden layer of the second digital artificial neural network such that the interface recursively couples the semiconductor chip to the second digital artificial neural network.

The interface may transform the analogous output signal of the analogous artificial neural network into a digital control signal. At least one digital node of a hidden layer of the second trained artificial neural network receive the digital control signal. The digital signal then affects the operation of those digital nodes and consequently the output of those digital nodes. The analogous artificial neural network therefore influences the operation of the second trained artificial neural network.

Advantages and effects as well as further developments of the system result from the advantages and effects as well as further developments of the semiconductor chip and the device described above. In this respect, it is referred to the preceding description. In a further example, the input projection layer may comprise at least one of the group: a pixel array, an olfactory sensor array, a pressure sensor array, an ultrasound sensor array, a temperature sensor array, and an acoustic sensor array.

According to an aspect of the invention, a method for manufacturing a system according to the above description is provided, wherein the method comprises at least the following steps: separately training the second digital artificial neural network with a separate second training data set; providing a semiconductor chip with a separately trained analogous artificial neural network being trained with a first training data set; recursively connecting the semiconductor chip to the separately trained second digital artificial neural network, such that the output of the analogous artificial neural network is provided to at least one hidden layer of the second digital artificial neural network; and training the analogous artificial neural network of the recursively connected semiconductor chip and the separately trained second digital artificial neural network together, the training comprising a training of the analogous artificial neural network.

The recursive connection of the semiconductor chip to the separately trained second digital artificial neural network comprises the recursive connection of the analogous artificial neural network to the separately trained second digital artificial neural network.

In the step training the analogous artificial neural network of the recursively connected semiconductor chip and the separately trained second digital artificial neural network together, the analogous artificial neural network may stay fixed. The training then comprises the training of the separately trained second digital artificial neural network while the analogous artificial neural network influences the separately trained second digital artificial neural network. Alternatively, the analogous artificial neural network may be trainable such that the training also comprises a training of the analogous artificial neural network.

Advantages and effects as well as further developments of the method for manufacturing a system result from the advantages and effects as well as further developments of the semiconductor chip, the device, the system, and the method for manufacturing a semiconductor chip described above. In this respect, it is referred to the preceding description.

In an example, the step providing a semiconductor chip with a separately trained analogous artificial neural network, may comprise at least the following sub-step: separately training the first digital artificial neural network.

Thus, the first digital artificial neural network is trained before manufacturing the analogous artificial neural network. The semiconductor chip is then manufactured using the first trained digital artificial neural network according to the method for manufacturing a semiconductor described above.

Alternatively or additionally, the analogous artificial neural network may be trained of the analogous electric circuit comprises analogous electronic components with an adjustable characteristic.

Furthermore, for example, a third training data set is used to train the analogous artificial neural network and the separately trained second digital artificial neural network together.

The first training data set may be adapted to the training of the analogous artificial neural network. The second training data set may be adapted to the training of the second digital artificial neural network. The third training data set may be adapted to train the analogous artificial neural network and the second digital artificial neural network, together. Hence, the training may be performed with an increased efficiency.

In the following the invention is described by the means of an exemplary embodiment using the attached drawing.
- Fig. 1a, b: shows a schematic drawing of an analogous artificial neural network.
- Fig. 2a, b: shows a schematic drawing of a digital (a) and analogous (b) artificial neural network.
- Fig. 3a, b: shows a schematic drawing of a sensor array.
- Fig. 4: shows a schematic drawing of an example of a control circuit of a sensor element.
- Fig. 5: shows a flow chart representing a node of a neural network.
- Fig. 6a-h: shows a schematic drawing of analogous electrical circuits for analogous electronic nodes.
- Fig. 7a-g: shows a schematic drawing of an analogous electrical circuits for providing a bias and different alternatives of functional progressions.
- Fig. 8: shows a schematic drawing of an electrical component with a changeable characteristic.
- Fig. 9a, b: shows a schematic drawing of switchable electrical connections.
- Fig. 10: shows a schematic drawing of the system with an analogous artificial neural network on a semiconductor being recursively coupled to a trained digital artificial neural network.
- Fig. 11: shows a flow chart of the method for manufacturing a semiconductor chip.
- Fig. 12: shows a flow chart of the method for manufacturing a system.

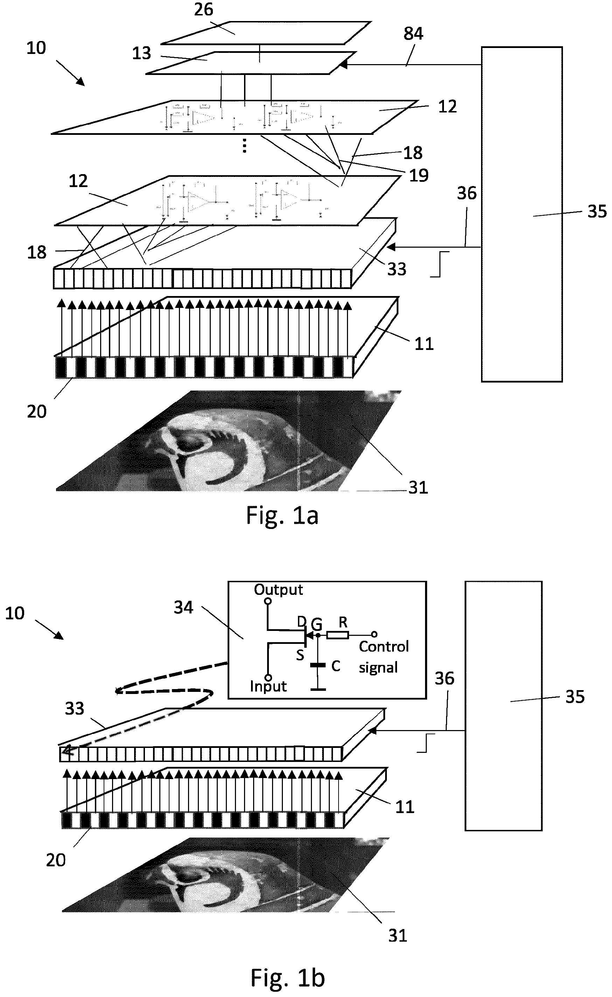

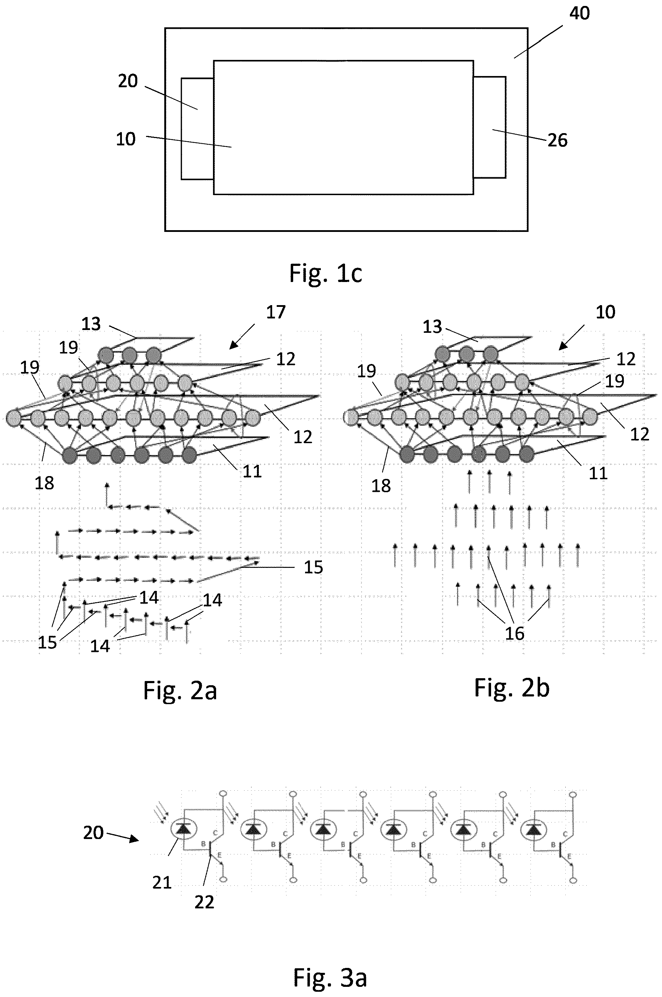

Fig. 1a shows a schematic drawing of an analogous artificial neural network 10. The analogous artificial neural network 10 is implemented as an analogous electrical circuit on a semiconductor chip 40 as shown in fig. 1c. This means that the analogous artificial neural network 10 cannot be reprogrammed by amending a software. The physical structure of the analogous artificial neural network 10 is fixed. The analogous electrical circuit is hardwired such that also the analogous artificial neural network 10 is hardwired.

The analogous electrical circuit comprises an input 20 and an output 26, wherein the analogous artificial neural network 10 electrically connects the input 20 to the output 26.

As shown in fig. 1a, the analogous artificial neural network 10 may comprise an input layer 11, at least one hidden layer 12, and an output layer 13. All layers may comprise at least one analogous electronic node being built from analogous electrical components. The analogous electronic nodes comprise a node input and a node output.

Fig. 1a shows analogous electronic nodes in the hidden layers 12 as examples of analogous electric components. This shall not limit the analogous electronic nodes to those analogous electric components.

Furthermore, the example shows two hidden layers 12. Of course, the analogous artificial neural network may also comprise only one or more than two hidden layers 12.

The node inputs of the input layer 11 may be electrically connected to the input 20. According to the example shown in fig. 1a, the input 20 may be the input layer 11. Electrical signals from the input 20 may propagate to the node inputs of the input layer 11.

The input 20 may be a sensor array, for example a two-dimensional pixel array that collects light being emitted or reflected from an object 31. In this example, the object 31 is an image.

The node outputs of the output layer 13 may be electrically connected to the output 26. Electrical signals from the node outputs of the output layer 13 may propagate to the output 26.

The nodes of at least one hidden layer 12 are electrically connected to the nodes of the input layer 11 and/or the nodes of the output layer 13. Electrical lines 18, 19 may provide an electrical connection between the node outputs and the node inputs.

Electrical lines 18 connect node outputs being closer to the input 20 to node inputs being closer to the output 26. Thus, electrical signals propagate along the electrical lines 18 in a forward direction from the input 20 towards the output 26.

Electrical lines 19 connect node outputs being closer to the output 26 to node inputs being closer to the input 20. In this example, electrical lines 19 only connect nodes of hidden layers 12. Thus, electrical lines 19 may connect the node output and the node input of the same node or of a node being closer to the input 20. Thus, electrical signals propagate along the electrical lines 19 in a backward direction from the output 26 towards the input 20.

Between the input layer 11 and the first hidden layer 12, which is the lower one in fig. 1a, the analogous artificial neural network 10 may comprise a switching layer 33. The switching layer 33 may have at least two switching states. In a first switching state, the switching layer 33 may interrupt any electrical connection between the nodes of the input layer 11 and the remaining nodes of the analogous artificial neural network 10. In a second switching state, the switching layer 33 may establish the electrical connection between the nodes of the input layer 11 and remaining nodes of the analogous artificial neural network 10, e. g. the nodes of the first hidden layer 12. This allows to start and stop the processing of input signals by the analogous artificial neural network 10. The switching layer 33 may switch all electrical connection between the input layer 11 and the remaining layers simultaneously.

The switching layer 33 may comprise at least one analogous electronic switch 34 as shown in fig. 1b. The analogous electronic switch 34 may for example comprise a field effect transistor that has a control signal input. The control signal at the gate of the field effect transistor may switch on and switch off the analogous electronic switch 34. For example, if the control signal has a negative voltage U_{B} the analogous electronic switch 34 may be switched off and interrupt the electrical connection between the drain and the source. If, for example, the control signal has a positive voltage U_{B} the analogous electronic switch 34 may be switched on and establish the electrical connection between the drain and the source.

A controller 35 may provide the control signal via a control input 36. The controller 35 may be a component of the semiconductor chip 40. Alternatively, the controller 35 and the semiconductor chip 40 may be separate components of a device (not shown).

Furthermore, the controller 35 may provide an output control signal to the output layer 13 via control signal line 84. The controller 35 may further comprise an analogous electric control circuit for controlling the analogous artificial neural network 10. Furthermore, the controller 35 may comprise a digital electric control circuit for controlling the second digital artificial neural network 50. Additionally, the controller 35 may comprise a control program and a processor, wherein the control program run on the processor may control the control circuits.

Due to the analogous signal processing, the analogous artificial neural network 10 is much faster than a digital artificial neural network having the same network structure and the same training level.

Fig. 2a shows a schematic drawing of a first trained digital artificial neural network 17 that served as a master for the manufacturing of the analogous artificial neural network 10 shown in fig. 2b.

The vertical arrows 14 indicate the digital input signals. The arrows 15 denote the processing order of the digital nodes of the first trained digital artificial neural network 17. This shows that the digital input signals are fed in sequentially, one after another. Furthermore, the digital nodes are processed sequentially, one after another. The number of nodes determines the processing velocity.

The vertical arrows 16 in fig. 2b show the processing order of the analogous nodes of the analogous artificial neural network 10. All nodes of one layer operate simultaneously. Thus, the number of layers determines the processing velocity.

Since the number of nodes usually is larger than the number of layers, the analogous artificial neural network 10 process signals much faster than the first trained digital artificial neural network 17. Consequently, the analogous artificial neural network 10 provides output data earlier than the first trained digital artificial neural network 17.

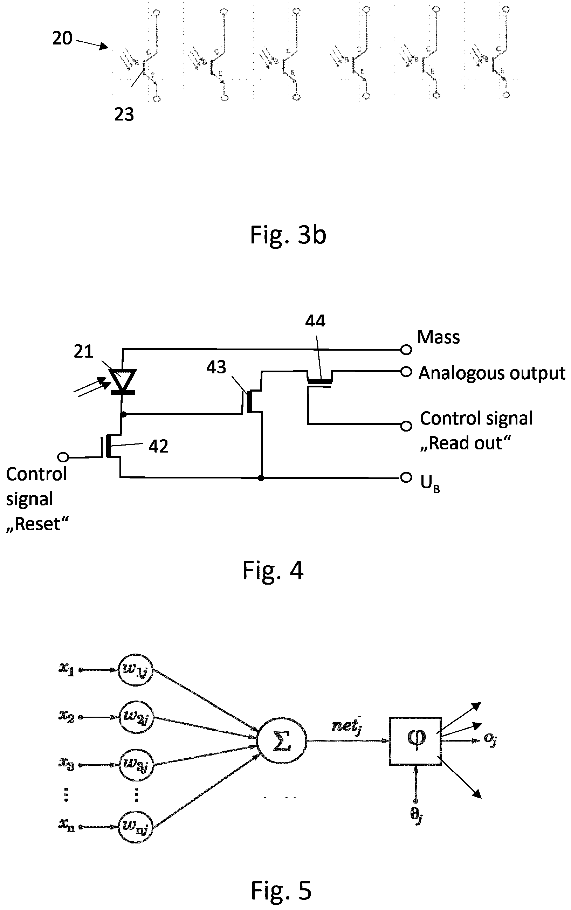

Fig. 3a and 3b show examples of sensor arrays of an input 20 that can provide input signals simultaneously to each node of the input layer 11 of the analogous artificial neural network 10. To simultaneously collect the signals from the input 20, the input 20 may not operate as charge-coupled device.

Fig. 3a shows a schematic drawing of a pixel line of a two-dimensional array of photodiodes 21. Each photodiode 21 connected to the base of a transistor 22. Fig. 3b shows a schematic drawing of a pixel line of a two-dimensional array of phototransistors 23. In both examples, each pixel comprises a transistor 22, 23 to amplify the resulting signal. Those components may be active pixel sensors which are known from the prior art. Such a pixel architecture allows to read out all pixels of an array simultaneously. Furthermore, that pixel architecture also allows to provide the pixel signals sequentially.

By designing the analogous artificial neural network 10 such that the input layer 11 directly processes the signals of the sensor array of input 20, it is not required to normalize the signals of the sensor array. The analogous nodes of the input layer 11 may therefore be the sensors of the sensor array. This may further accelerate the processing velocity of the analogous artificial neural network 10.

It is evident, that the sensor array may comprise any kind and number of sensors, for example, olfactory sensors, pressure sensors, ultrasound sensors, temperature sensors, and/or acoustic sensors.

Fig. 4 shows an example of a controllable sensor 21 of the input 20. That sensor is a photodiode 21 that is connected to the base of a first field effect transistor 43. The first field effect transistor 43 amplifies the signal of the photodiode 21. A second field effect transistor 42 may reset the signal of the photodiode 21 if a reset control signal is applied. A third field effect transistor 44 may switch on the amplification of the first field effect transistor 43 upon receiving a read-out control signal.

The reset control signal and the read-out control signal may be provided by controller 35 via control input 36 shown in fig. 1a.

Passive electric components, e. g. resistors and/or capacitors, are left out from fig. 4 for the sake of clarity. However, the dimensions of those passive electric components in such electronic circuits are known in the prior art.

The following discussion refers to the design process of the analogous nodes of the hidden layers 12 of the analogous artificial neural network 10. The analogous electronic node shall imitate the function of a biological neuron and implement the basic mathematical operations as e. g. AND, NOR, OR, NAND etc. Hence, it is required that all node parameters are adaptable in the design process of an analogous electrical circuit representing the analogous electronic node.

Fig. 5 shows the basic mathematical definition of a node for programming a digital artificial neural network. The node links several input signals x₁, ..., xₙ from several previous nodes, wherein each input signal is weighted with a weight w₁ⱼ, ..., wₙⱼ. The weight may be positive, negative or zero, wherein zero means that the connection to the corresponding previous node is switched off.

The transfer function Σ links the input signal, for example by summing up those input signals. However, the transfer function may also multiply, perform a Boolean operation, differentiate, or integrate, or perform any other logical operation. the input signals.

The activation function φ determines the output signal oⱼ of the node. The output signal may be a Gaussian bell function, a jump function, a rectangular signal, a cylinder function, or a sigmoid, etc. A threshold value or bias θⱼ may influence the activation function.

For the conversion of the digital node into analog circuit technology, the design may be based on the basic circuit variants of the passive four-pole theory of electrical engineering and the analog circuits for operational amplifiers.

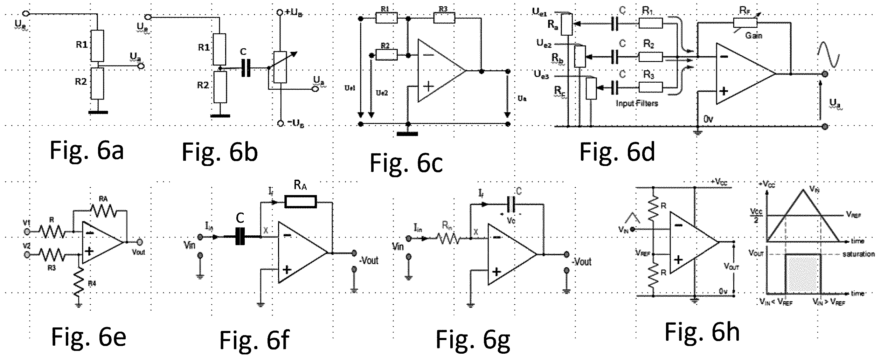

Figs. 6a to 6h show examples of basic analogous electrical circuits which allow to provide the characteristics discussed above with fig. 5. Some or all examples may be combined in any combination to provide an analogous electronic node.

Fig. 6a and 6b show passive electronic components, wherein fig. 6c to 6h show active electronic components, e. g. operational amplifiers.

Fig. 6a shows a voltage divider for a weighting of an input signal. Fig. 6b shows a circuit for shifting an arbitrary function around the zero line to implement a bias or threshold. Fig. 6c shows a circuit comprising an operational amplifier for adding two inputs Uₑ₁ and Uₑ₂. Fig. 6e shows a circuit comprising an operational amplifier for subtracting inputs V₁ and V₂. The circuit in fig. 6d represents a combination of: mixing different signals, addition and amplification. Fig. 6f is a circuit comprising an operational amplifier that differentiates input signals. Fig. 6g shows an integrator. Fig. 6h shows a non-inverting comparator, which allows the adjacent conversion of function curves.

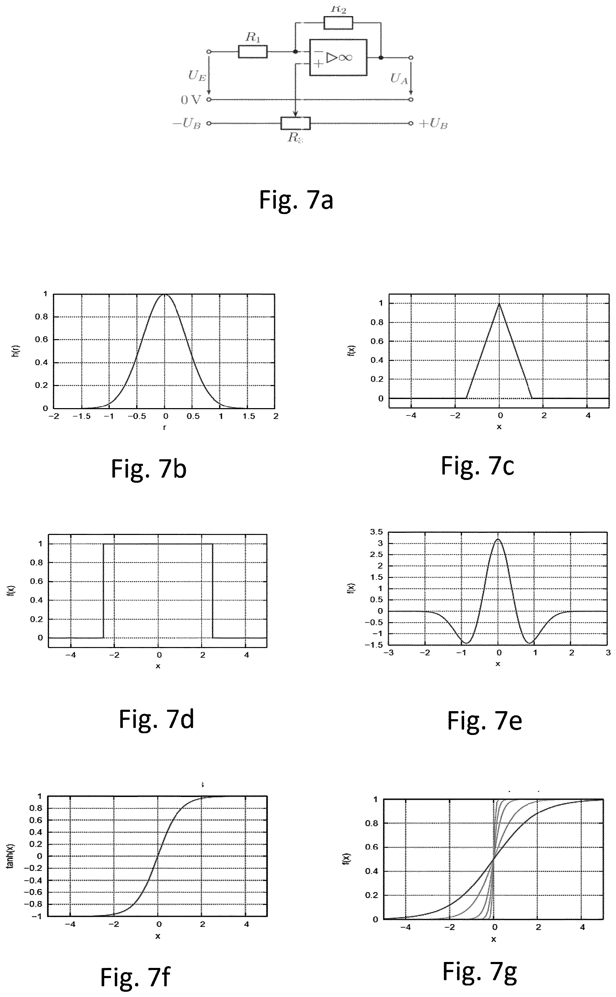

Fig. 7a shows a further example, of a circuit having an operational amplifier. That example allows to introduce an offset into a signal as implementation of a bias. Furthermore, any function may be implemented by adding resistors and/or capacitors and linking with further operational amplifiers. Examples of those functions are shown in figs. 7b to 7h. Fig. 7b shows a one-dimensional gaussian bell. Fig. 7c shows a cone function. Fig. 7d shows a cylinder function. Fig. 7e shows a Mexican hat function. Fig. 7f shows a hyperbolic tangent function. Fig. 7g shows a Fermi function with temperature parameters.

The nodes of the hidden layers 12 may be implemented according to the state of the first trained digital artificial neural network 17. The state comprises at least information about the digital nodes of the first trained digital artificial neural network 17 and information about a digital connection architecture between the digital nodes of the first trained digital artificial neural network 17. The state of each digital node of the first trained digital artificial neural network 17 is determined.

The information may comprise information about the bias, the transfer function, the activation function and/or the weights. The information about the digital connection architecture may comprise the information about the connections between the nodes.

The information about the digital nodes of the first trained digital artificial neural network is used to design the analogous electronic nodes using analogous electrical circuits, for example the circuits discussed above. The information about the digital connection architecture is used to design the electrical lines between the nodes resulting in an analogous connection architecture.

The analogous electronic nodes and the analogous connection architecture is implemented as analogous electrical circuit on a semiconductor chip 40.

The analogous electronic nodes and/or the analogous connection architecture may comprise non-adaptable electronic components having fixed characteristics. In that case, the analogous artificial neural network 10 is unable to learn.

To provide an analogous artificial neural network 10 that may learn, the analogous electrical circuit may comprise adaptable electronic components. Those electronic components may have a changeable characteristic.

Since the analogous artificial neural network 10 is based on a trained digital artificial neural network, only a small number of analogous electronic nodes and/or portions of the analogous connection architecture require such electronic components with a changeable characteristic.

Those analogous electronic nodes and/or portions of the analogous connection architecture may for example be connected to digital potentiometers, capacitor diodes etc. which are electronic components with a changeable characteristic. The controller may control those electronic components during the training of the analogous artificial neural network 10.

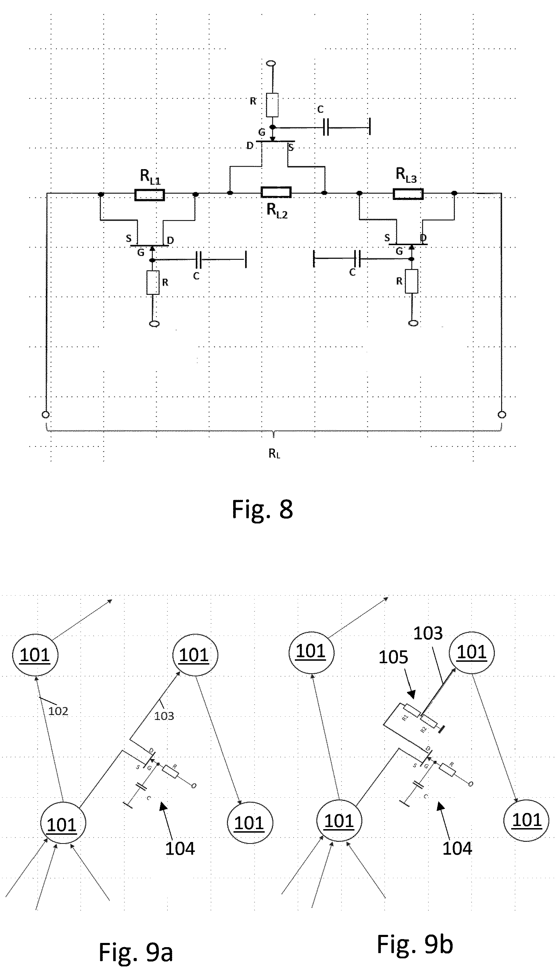

Fig. 8 shows an example using field effect transistors to bypass resistors R_{L1} to R_{L3} resulting in a changeable resistor R_{L}. The controller may individually control each field effect transistor using a control signal at the corresponding gate. Switching-on a field effect transistor causes a bypass of the corresponding resistor.

In the same manner, the electrical connections 102, 103 between nodes 101 may be established or interrupted as shown in Fig. 9a. The circuit 104 shows a field effect transistor in the electrical line 103. The field effect transistor interrupts the electrical line 103 if the field effect transistor is switched off.

Fig. 9b shows the line 103 having circuit 104. In addition, line 103 comprises a voltage divider 105. The voltage divider 105 works as weight for the signal propagating along line 103. Thus, for implementing the weights of the digital nodes into the analogous electronic circuit it may be sufficient to implement those weights into the analogous connection architecture. This simplifies the implementation of the analogous artificial neural network 10.

Line 103 may for example comprise a plurality of different voltage dividers which may be switched by corresponding field effect transistors. Then, the weight of the line 103 may be changed according to which and how many of the different voltage dividers are active. This may be an exemplary manner to train the analogous artificial neural network 10.

For training the analogous artificial neural network 10, the controller 35 may comprise a training algorithm that may be implemented as known for digital artificial neural networks. The controller 35 may then control the electronic components having a changeable characteristic to perform the training process. In the final training state, the controller 35 may provide the corresponding switching signals to the semiconductor chip 40 when the analogous artificial neural network 10 shall process signals.

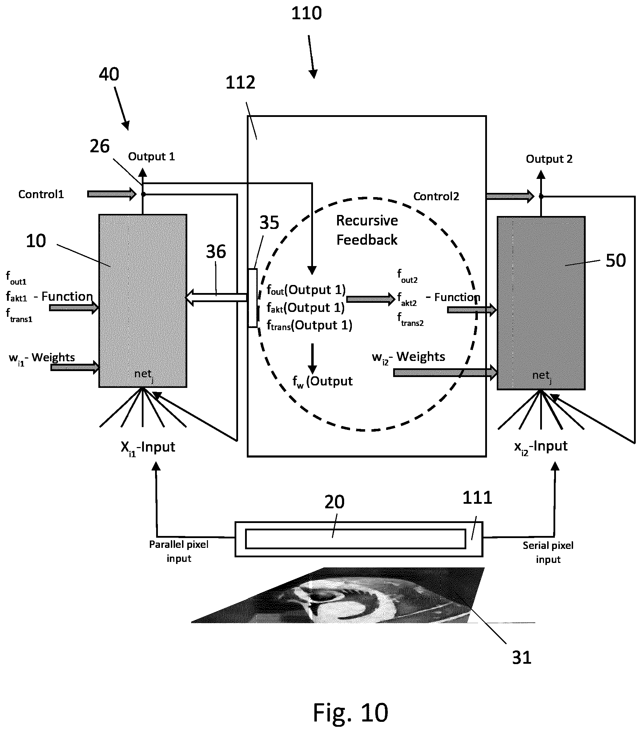

Fig. 10 shows a system 110 comprising an input projection layer 111, a semiconductor chip 40 and a second digital artificial neural network 50. The second digital artificial neural network 50 may be a trained digital neural network.

Furthermore, the system 110 may comprise a controller 35 and an analog-digital interface 112. The interface 112 receives the analogous output signals of the semiconductor chip 40, i.e., of the analogous artificial neural network 10. The interface 112 converts the analogous output signals to digital signals and transfers them to digital nodes of the second digital artificial neural network 50. The digital nodes may be arranged in the hidden layers of the second digital artificial neural network 50.

This causes a recursive coupling of the analogous artificial neural network 10 to the second digital artificial neural network 50.

For example, the analogous artificial neural network 10 may provide output signals that roughly categorize elements of an image 31, e.g., in dangerous and harmless elements. The second digital artificial neural network 50 may for example, identify the image elements of image 31. The categories of the image elements provided by the analogous artificial neural network may influence the identification of the image elements by the second digital artificial neural network.

The input projection layer 111 may feed input signals to both neural networks 10, 50. The input projection layer 111 may be the input layer 11 of the analogous artificial neural network 10. The analogous artificial neural network 10 receives the input signals simultaneously for all nodes of the input layer 11. The second digital artificial neural network 50 receives the input signals sequentially.

The controller 35 may synchronize the analogous artificial neural network 10 to the operation of the second digital artificial neural network 50. For example, the controller 35 may provide a start signal for the analogous artificial neural network 10 when the second digital artificial neural network 50 start operation. The start signal may cause the switching layer 31 to establish the connection between the input layer 11 and the first hidden layer 12 of the analogous artificial neural network. Furthermore, the controller 35 may reset the analogous artificial neural network 10 after operation of the system 110.

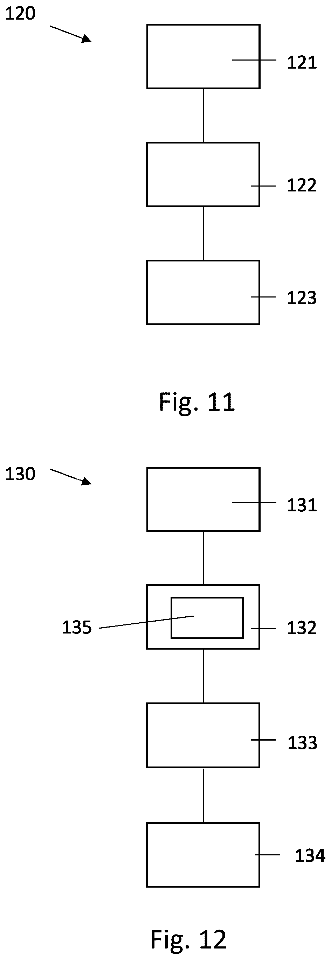

Fig. 11 shows a flow chart for a method 120 for manufacturing a semiconductor chip.

In a first step 121 a first trained digital artificial neural network is provided. The first trained digital artificial neural network performs a specific task with a sufficient precision. The first trained digital artificial neural network is a software-based artificial neural network running on an IT-platform.

The training of the first trained digital artificial neural network may be performed as known in the prior art using training data.

Then, in a further step 122, the state of the first trained digital artificial neural network is determined. The state comprises information about the digital nodes and the digital connection architecture of the first trained digital artificial neural network.

The state characterizes the complete first trained digital artificial neural network, e.g., the weights, the transfer functions, the activation functions and the biases of the nodes. Furthermore, the state characterizes the connections between the digital nodes of the first trained digital artificial neural network, i.e., the digital connection architecture.

In a further step 123, a semiconductor chip is manufactured. In the manufacturing process, an analogous electrical circuit is designed that forms an analogous artificial neural network. The state of the first trained digital artificial neural network is implemented into the design of the analogous artificial neural network.

For example, the analogous artificial neural network may comprise analogous electronic nodes and an analogous connection architecture between the analogous electronic nodes. The analogous electronic nodes are designed according to the digital nodes of the first trained digital artificial neural network. If the first trained digital artificial neural network comprises a hidden layer with ten digital nodes, then the analogous artificial neural network is implemented with a hidden layer having ten analogous nodes comprising the same weights, transfer functions, activation functions, and biases as the first trained artificial neural network.

Accordingly, the analogous connection architecture is designed according to the digital connection architecture. Thus, if a specific digital node is connected to a set of further digital nodes, the corresponding analogous electronic node is connected to a set of corresponding analogous electronic nodes.

The result of the method 120 is a semiconductor chip as described above.

Fig. 12 shows a flow chart of a method 130 for manufacturing a system with an analogous artificial neural network being recursively connected to a second digital artificial neural network.

In a step 131 the second digital artificial neural network is trained separately.

In a further step 132 a semiconductor chip with a separately trained analogous artificial neural network is provided. The semiconductor chip may comprise any number of separately trained analogous artificial neural networks.

The step 132 may be performed simultaneously with step 131. Alternatively, the steps 131 and 132 may be performed in any order.

For providing the semiconductor chip with the separately trained analogous artificial neural network, the analogous artificial neural network may be trained. Alternatively, or additionally, the first trained digital artificial neural network may be trained before manufacturing the semiconductor chip.

In another step 133, the semiconductor chip is recursively coupled to the separately trained second digital artificial neural network. An interface as described above may be used for the recursive coupling.

After step 133, in a step 134, the analogous artificial neural network and separately trained second digital artificial neural network are trained together. In that training the separately trained second digital artificial neural network receives input from the analogous artificial neural network.

The separate training of the analogous artificial neural network and/or the first digital artificial neural network being the base of the analogous artificial neural network may use a first training data set.

The separate training of the second digital artificial neural network may be performed with a separate second training data set.

The training of the analogous artificial neural network and the second digital artificial neural network together may use a third training data set.

Each training data set may be optimized for the specific training purposes, i.e., the first training data set may be optimized for providing output signals that may influence the operation of the second digital artificial neural network.

## Claims

1. System comprising an input projection layer (111), at least one second digital artificial neural network (50), and at least one semiconductor chip (40), wherein the semiconductor chip (40) is recursively coupled to the second digital artificial neural network (50) such that the output of the semiconductor chip (40) is provided to at least one hidden layer of the second digital artificial neural network (50) and wherein the input (20) of the semiconductor chip (40) and an input layer of the second digital artificial network (50) are electrically connected to the input projection layer (111);
Wherein the semiconductor chip is obtainable by at least the following steps:
- providing (121) a first trained digital artificial neural network (17);
- determining (122) a state of the first trained digital artificial neural network (17), the state comprising at least information about digital nodes of the first trained digital artificial neural network (17) and information about a digital connection architecture between the digital nodes of the first trained digital artificial neural network (17);
- manufacturing (123) a semiconductor chip (40) comprising an analogous electrical circuit having an analogous artificial neural network (10) being designed according to the state of the first trained digital artificial neural network (17), wherein the analogous electrical circuit comprises at least one electronic component having changeable characteristics, wherein the analogous artificial neural network may be trained by changing the characteristics of the at least one electronic component.

2. System according to claim 1, wherein the analogous artificial neural network (10) comprises analogous electronic nodes and an analogous connection architecture between the analogous electronic nodes, wherein in the step manufacturing a semiconductor chip (40), the analogous electronic nodes and the analogous connection architecture are manufactured to correspond to the digital nodes and the digital connection architecture of the first trained digital artificial neural network (17).

3. System according to claim 1 or 2, wherein the analogous electrical circuit comprises at least one input (20) being configured to receive at least one input signal and at least one output (26) being configured to provide at least one analogous output signal, wherein the analogous artificial neural network (10) electrically connects the input (20) to the output (26).

4. System according to claim 3, wherein the analogous artificial neural network (10) comprises at least one analogous electronic switch (34) and/or at least one analogous electronic node.

5. System according to claim 3 or 4, wherein the input (20) comprises a sensor array being configured to provide sensor data signals to the analogous artificial neural network (10) from each sensor (21, 23) of the sensor array simultaneously, wherein the semiconductor chip (40) preferably further comprises a control input (36) being configured to receive a start signal, wherein further preferably the sensor array is further configured to provide sensor data signals when receiving the start signal.

6. System according to one of claims 1 to 5, wherein the system (110) further comprises at least one interface (112) for controlling and transferring data being configured to recursively couple the semiconductor chip (40) to the second digital artificial neural network, wherein the interface is preferably configured to provide at least one analogous control signal for the analogous artificial neural network (10), wherein the interface (112) is further preferably configured to receive the analogous output signal from the semiconductor chip (40), to generate a digital control signal from the analogous output signal and to provide at least one digital control signal to at least one digital node in at least one hidden layer of the second digital artificial neural network (50) such that the interface (112) recursively couples the semiconductor chip (40) to the second digital artificial neural network (50).

7. System according to one of claims 1 to 6, wherein the input projection layer (111) comprises at least one of the group: a pixel array, an olfactory sensor array, a pressure sensor array, an ultrasound sensor array, a temperature sensor array, and an acoustic sensor array.

8. Method for manufacturing a system according to one of claims 1 to 7, wherein the method (130) comprises at least the following steps:
- separately training (131) the second digital artificial neural network with a separate second training data set;
- providing (132) a semiconductor chip according to one of claims 1 to 4 with a separately trained analogous artificial neural network being trained with a first training data set;
- recursively connecting (133) the semiconductor chip to the separately trained second digital artificial neural network, such that the output of the analogous artificial neural network is provided to at least one hidden layer of the second digital artificial neural network; and
- training (134) the analogous artificial neural network of the recursively connected semiconductor chip and the separately trained second digital artificial neural network together, the training (134) comprising a training of the analogous artificial neural network.

9. Method according to claim 8, wherein the step providing (132) a semiconductor chip with a separately trained analogous artificial neural network, comprises at least the following sub-step:
- separately (135) training the first digital artificial neural network.

10. Method according to claim 8 or 9, wherein a third training data set is used to train the analogous artificial neural network and the separately trained second digital artificial neural network together.

## Patentansprüche

1. System, aufweisend eine Eingangsprojektionsschicht (111), mindestens ein zweites digitales künstliches neuronales Netzwerk (50) und mindestens einen Halbleiterchip (40), wobei der Halbleiterchip (40) rekursiv mit dem zweiten digitalen künstlichen neuronalen Netzwerk (50) gekoppelt ist, sodass der Ausgang des Halbleiterchips (40) mindestens einer versteckten Schicht des zweiten digitalen künstlichen neuronalen Netzwerks (50) zur Verfügung gestellt wird und wobei der Eingang (20) des Halbleiterchips (40) und eine Eingangsschicht des zweiten digitalen künstlichen Netzwerks (50) elektrisch mit der Eingangsprojektionsschicht (111) verbunden ist;
wobei der Halbleiterchip mindestens durch folgende Schritte erhältlich ist:
- Bereitstellen (121) eines ersten trainierten digitalen künstlichen neuronalen Netzwerks (17);
- Bestimmen (122) eines Zustands des ersten trainierten digitalen künstlichen neuronalen Netzwerks (17), wobei der Zustand mindestens Informationen über digitale Knoten des ersten trainierten digitalen künstlichen neuronalen Netzwerks (17) und Informationen über eine digitale Verbindungsarchitektur zwischen den digitalen Knoten des ersten trainierten digitalen künstlichen neuronalen Netzwerks (17) aufweist;
- Herstellen (123) eines Halbleiterchips (40) aufweisend eine analoge elektrische Schaltung mit einem analogen künstlichen neuronalen Netzwerk (10), das gemäß dem Zustand des ersten trainierten digitalen künstlichen neuronalen Netzwerks entworfen wird (17), wobei die analoge elektrische Schaltung mindestens eine elektronische Komponente mit wechselbaren Eigenschaften aufweist, wobei das analoge künstliche neuronale Netzwerk durch Änderung der Eigenschaften mindestens einer elektronischen Komponente trainiert werden kann.

2. System gemäß Anspruch 1, wobei das analoge künstliche neuronale Netzwerk (10) analoge elektronische Knoten und eine analoge Verbindungsarchitektur zwischen den analogen elektronischen Knoten aufweist, wobei im Schritt zur Herstellung eines Halbleiterchips (40) die analogen elektronischen Knoten und die analoge Verbindungsarchitektur hergestellt werden, um den digitalen Knoten und der digitalen Verbindungsarchitektur des ersten trainierten digitalen künstlichen neuronalen Netzwerks zu entsprechen (17).

3. System gemäß Anspruch 1 oder 2, wobei der analoge elektrische Stromkreis mindestens einen Eingang (20) aufweist, der eingerichtet ist, mindestens ein Eingangssignal zu empfangen, und mindestens einen Ausgang (26), der eingerichtet ist, mindestens ein analoges Ausgangssignal bereitzustellen, wobei das analoge künstliche neuronale Netzwerk (10) den Eingang (20) elektrisch mit dem Ausgang (26) verbindet.

4. System gemäß Anspruch 3, wobei das analoge künstliche neuronale Netzwerk (10) mindestens einen analogen elektronischen Schalter (34) und/oder mindestens einen analogen elektronischen Knoten aufweist.

5. System gemäß Anspruch 3 oder 4, wobei der Eingang (20) aus einem Sensor-Array besteht, das so konfiguriert wird, dass es Sensordatensignale an das analoge künstliche neuronale Netzwerk (10) von jedem Sensor (21, 23) gleichzeitig liefert, wobei der Halbleiterchip (40) ferner vorzugsweise einen Steuereingang (36) aufweist, der konfiguriert wird, um ein Startsignal zu empfangen, wobei das Sensor-Array vorzugsweise so konfiguriert ist, dass es beim Empfang des Startsignals Sensordatensignale bereitstellt.

6. System gemäß einem der Ansprüche 1 bis 5, wobei das System (110) außerdem mindestens eine Schnittstelle (112) zur Steuerung und Datenübertragung aufweist, die so konfiguriert ist, dass der Halbleiterchip (40) rekursiv mit dem zweiten digitalen künstlichen neuronalen Netzwerk gekoppelt wird, wobei die Schnittstelle vorzugsweise so konfiguriert ist, dass sie mindestens ein analoges Steuersignal für das analoge künstliche neuronale Netzwerk (10) bereitstellt, wobei die Schnittstelle (112) vorzugsweise so konfiguriert wird, dass sie das analoge Ausgangssignal vom Halbleiterchip (40) empfängt, ein digitales Steuersignal vom analogen Ausgangssignal erzeugt und mindestens ein digitales Steuersignal an mindestens einen digitalen Knoten in mindestens einer versteckten Schicht des zweiten digitalen künstlichen neuronalen Netzwerks (50) bereitstellt, sodass die Schnittstelle (112) den Halbleiterchip (40) rekursiv mit dem zweiten digitalen künstlichen neuronalen Netzwerk (50) koppelt.

7. System gemäß einem der Ansprüche 1 bis 6, wobei die Eingangsprojektionsschicht (111) mindestens eines aus der Gruppe umfasst: ein Pixel-Array, ein olfaktorisches Sensor-Array, ein Drucksensor-Array, ein Ultraschallsensor-Array, ein Temperatursensor-Array und ein akustisches Sensor-Array.

8. Verfahren zur Herstellung eines Systems gemäß einem der Ansprüche 1 bis 7, wobei die Methode (130) mindestens die folgenden Schritte umfasst:
- separates Trainieren (131) des zweiten digitalen künstlichen neuronalen Netzwerks mit einem separaten zweiten Trainingsdatensatz;
- Bereitstellen (132) eines Halbleiterchips gemäß einem der Ansprüche 1 bis 4 mit einem separat trainierten analogen künstlichen neuronalen Netzwerk, das mit einem ersten Trainingsdatensatz trainiert wird;
- rekursives Verbinden (133) des Halbleiterchips mit dem separat trainierten zweiten digitalen künstlichen neuronalen Netzwerk, sodass die Ausgabe des analogen künstlichen neuronalen Netzwerks mindestens einer verborgenen Schicht des zweiten digitalen künstlichen neuronalen Netzwerks bereitgestellt wird; und
- Trainieren (134) des analogen künstlichen neuronalen Netzwerks des rekursiv verbundenen Halbleiterchips und des separat trainierten zweiten digitalen künstlichen neuronalen Netzwerks zusammen, wobei das Training (134) ein Training des analogen künstlichen neuronalen Netzwerks aufweist.

9. Verfahren gemäß Anspruch 8, wobei der Schritt Bereitstellen (132) eines Halbleiterchips mit einem separat trainierten analogen künstlichen neuronalen Netzwerk mindestens den folgenden Unterschritt aufweist:
- separates (135) Trainieren des ersten digitalen künstlichen neuronalen Netzwerks.

10. Verfahren gemäß Anspruch 8 oder 9, bei der ein dritter Trainingsdatensatz verwendet wird, um das analoge künstliche neuronale Netzwerk und das separat trainierte zweite digitale künstliche neuronale Netzwerk gemeinsam zu trainieren.

## Revendications

1. Système comprenant une couche de projection d'entrée (111), au moins une seconde de réseau neuronal artificiel numérique (50), et au moins une puce semi-conductrice (40), dans laquelle la puce semi-conductrice (40) est couplée récursivement au second réseau de neurones artificiel numérique (50), de sorte que la sortie de la puce semi-conductrice (40) soit fournie à au moins une couche cachée du second réseau de neurones artificiel numérique (50) et où l'entrée (20) de la puce semi-conductrice (40) et une couche d'entrée du second réseau artificiel numérique (50) est connectée électriquement à la couche de projection d'entrée (111);
dans laquelle la puce semi-conductrice est accessible par au moins les étapes suivantes:
- fournir (121) un premier réseau de neurones artificiel numérique entraîné (17) ;
- déterminer (122) un état du premier réseau de neurones artificiel numérique entraîné (17), l'état comprenant au moins des informations sur les nœuds numériques du premier réseau de neurones artificiel numérique entraîné (17) et des informations sur une architecture de connexion numérique entre les nœuds numériques du premier réseau de neurones artificiel numérique entraîné (17) ;
- fabriquer (123) d'une puce semi-conductrice (40) comprenant un circuit électrique analogue doté d'un réseau de neurones artificiel analogue (10) conçue selon l'état du premier réseau de neurones artificiel numérique entraîné (17), dans lequel le circuit électrique analogue comprend au moins un composant électronique ayant des caractéristiques changeables, dans lequel le réseau de neurones artificiel analogue peut être entraîné en modifiant les caractéristiques d'au moins un composant électronique.

2. Système selon la revendication 1, dans lequel le réseau de neurones artificiel analogue (10) comprend des nœuds électroniques analogiques et une architecture de connexion analogue entre ces nœuds électroniques, dans lequel lors de la fabrication progressive d'une puce semi-conductrice (40), les nœuds électroniques analogiques et l'architecture de connexion analogue sont fabriqués pour correspondre aux nœuds numériques et à l'architecture de connexion numérique du premier réseau de neurones artificiel numérique entraîné (17).

3. Système selon la revendication 1 ou 2, où le circuit électrique analogue comprend au moins une entrée (20) configurée pour recevoir au moins un signal d'entrée et au moins une sortie (26) configurée pour fournir au moins un signal de sortie analogue, dans lequel le réseau de neurones artificiel analogue (10) relie électriquement l'entrée (20) à la sortie (26).

4. Système selon la revendication 3, dans lequel le réseau de neurones artificiel analogue (10) comprend au moins un commutateur électronique analogue (34) et/ou au moins un nœud électronique analogue.

5. Système selon la revendication 3 ou 4, où l'entrée (20) comprend un réseau de capteurs configuré pour fournir des signaux de données de capteurs au réseau de neurones artificiel analogue (10) provenant simultanément de chaque capteur (21, 23) de la matrice de capteurs, où la puce semi-conductrice (40) comprend de préférence une entrée de contrôle (36) configurée pour recevoir un signal de démarrage, de préférence le réseau de capteurs est configuré pour fournir des signaux de données de capteurs lors de la réception du signal de départ.

6. Système selon l'une des revendications 1 à 5, où le système (110) comprend en outre au moins une interface (112) pour contrôler et transférer des données configurées pour coupler récursivement la puce semi-conductrice (40) au second réseau de neurones artificiel numérique, où l'interface est de préférence configurée pour fournir au moins un signal de contrôle analogue pour le réseau de neurones artificiel analogue (10), où l'interface (112) est en outre configurée de préférence pour recevoir le signal de sortie analogique de la puce semi-conductrice (40), pour générer un signal de contrôle numérique à partir du signal de sortie analogique et pour fournir au moins un signal de contrôle numérique à au moins un nœud numérique dans au moins une couche cachée du second réseau de neurones artificiels numérique (50), de sorte que l'interface (112) couple récursivement la puce semi-conductrice (40) au second réseau artificiel numérique réseau de neurones (50).

7. Système selon l'une des revendications 1 à 6, où la couche de projection d'entrée (111) comprend au moins un des groupes: un réseau de pixels, un réseau de capteurs olfactifs, un réseau de capteurs de pression, un réseau de capteurs d'ultrasons, un réseau de capteurs de température et un réseau de capteurs acoustiques.

8. Méthode de fabrication d'un système selon l'une des revendications 1 à 7, dans laquelle la méthode (130) comprend au moins les étapes suivantes :
- entraînant séparément (131) le second réseau de neurones artificiels numériques avec un second ensemble de données d'entraînement séparé ;
- fournissant (132) une puce semi-conductrice selon l'une des revendications 1 à 4, avec un réseau de neurones artificiel analogue entraîné séparément avec un premier ensemble de données d'entraînement ;
- connectant récursivement (133) la puce semi-conductrice au second réseau de neurones artificiel numérique entraîné séparément, de sorte que la sortie du réseau de neurones artificiel analogue soit fournie à au moins une couche cachée du second réseau de neurones artificiel numérique ; et
- entraînement (134) du réseau neuronal artificiel analogue de la puce semi-conductrice récursivement connectée et du second réseau neuronal numérique numérique entraîné séparément, l'entraînement (134) comprenant un entraînement du réseau neuronal artificiel analogue.

9. Méthode selon la revendication 8, où l'étape fournissant (132) une puce semi-conductrice avec un réseau de neurones artificiel analogue entraîné séparément, comprend au moins la sous-étape suivante:
- séparément (135) entraînant le premier réseau de neurones artificiel numérique.

10. Méthode selon la revendication 8 ou 9, dans laquelle un troisième ensemble de données d'entraînement est utilisé pour entraîner ensemble le réseau de neurones artificiel artificiel analogue et le second réseau de neurones artificiel numérique entraîné séparément.
